# EUROPEAN PATENT SPECIFICATION

(11) **EP 4 148 703 B1**
(45) Date of publication and mention of the grant of the patent: **17.12.2025**
(21) Application number: 22180997.3
(22) Date of filing: 24.06.2022
(51) Int. Cl.: B60W 30/09, B60W 60/00, G08G 1/16, B60W 30/095

(54) **VEHICLE BEHAVIOR PREDICTION DEVICE**
VORRICHTUNG ZUR VORHERSAGE DES VERHALTENS EINES FAHRZEUGS
DISPOSITIF DE PRÉDICTION DE COMPORTEMENT DE VÉHICULE

(30) Priority: 08.09.2021 JP 2021146117
(43) Date of publication of application: 15.03.2023
(73) Proprietor: TOYOTA JIDOSHA KABUSHIKI KAISHA, Toyota-shi Aichi 471-8571 (JP)
(72) Inventor: TANAKA, Shin, Toyota-shi 471-8571 (JP)
(74) Representative: J A Kemp LLP

(56) References cited:
- US-A1- 2017 355 307
- US-A1- 2017 371 347
- US-A1- 2020 216 063

## Description

### TECHNICAL FIELD

The present disclosure relates to a vehicle behavior prediction device.

### BACKGROUND

For example, Japanese Unexamined Patent Publication No. 2021-009440 discloses a device that predicts the departure of a stopped vehicle around the host vehicle and controls the vehicle based on the prediction result. Such a device predicts the departure of the stopped vehicle based on the presence or absence of a driver of the stopped vehicle, the lighting state of a brake lamp, the lighting state of a hazard lamp, the lighting state of a turn signal lamp, and the like. US 2017/371347 discloses a system for navigating a host vehicle based on detecting a door opening event.

### SUMMARY

Here, for example, a target vehicle may be intended to leave a queue of parallel parked vehicles. In this case, depending on the size of a space between the target vehicle and a vehicle in front of the target vehicle, the target vehicle may be able to leave the queue of vehicles as it is, or may not be able to leave the queue of vehicles without turning back. Therefore, as in Japanese Unexamined Patent Publication No. 2021-009440, even though an intention of predicting the advance of the target vehicle simply based on only the turn signal lamp or the like, prediction cannot be correctly performed depending on a space in front of the target vehicle.

Therefore, the present disclosure describes a vehicle behavior prediction device capable of accurately predicting the entry of a target vehicle into the host lane from a road region adjacent to the host lane on which the host vehicle travels.

According to an aspect of the present disclosure, there is provided a vehicle behavior prediction device as defined in appended claim 1.

In the vehicle behavior prediction device, whether or not the target vehicle is able to enter the host lane while avoiding the obstacle is predicted by using the length (front distance) of an empty space in front of the target vehicle and the turning radius of the target vehicle. That is, the vehicle behavior prediction device can predict whether or not the target vehicle is able to enter, based on whether or not the target vehicle is able to physically enter the host lane by performing steering. Thus, the vehicle behavior prediction device can accurately predict the entry of the target vehicle into the host lane from the road region adjacent to the host lane on which the host vehicle travels.

In the vehicle behavior prediction device described above, the turning radius estimation unit estimates the turning radius based on a steered angle of a tire of the target vehicle. In this case, the entry prediction unit can more accurately predict the entry of the target vehicle into the host lane based on the actual steered angle of the tire.

There is also provided a vehicle behavior prediction device as defined in claim 2, including a storage unit configured to store turning radius information in which the minimum turning radius is associated with each type of vehicle. The turning radius estimation unit may extract a minimum turning radius corresponding to a type of the target vehicle based on the turning radius information stored in the storage unit, and estimate the turning radius of the target vehicle based on the extracted minimum turning radius. In this case, the vehicle behavior prediction device can more accurately predict the entry of the target vehicle into the host lane in accordance with the type of the target vehicle.

In the vehicle behavior prediction device described above, the entry prediction unit may further predict whether or not the target vehicle is able to enter the host lane, based on a lateral position of the target vehicle in the road region. For example, even though the front distance is the same, depending on the lateral position of the target vehicle, the target vehicle may be able to enter the host lane, or the target vehicle may not be able to enter the host lane due to an obstacle in front. Therefore, the entry prediction unit can more accurately predict the entry of the target vehicle into the host lane by further using the lateral position of the target vehicle for prediction.

In the vehicle behavior prediction device described above, the entry prediction unit may further predict whether or not the target vehicle is able to enter the host lane, based on an inclination of the target vehicle with respect to an extension direction of the host lane. For example, even though the front distance is the same, depending on the inclination of the target vehicle, the target vehicle may be able to enter the host lane, or the target vehicle may not be able to enter the host lane due to an obstacle in front. Therefore, the entry prediction unit can more accurately predict the entry of the target vehicle into the host lane by further using the inclination of the target vehicle for prediction.

In the vehicle behavior prediction device described above, when the target vehicle cannot enter the host lane while avoiding the obstacle, the entry prediction unit may predict an amount of protrusion of the target vehicle into the host lane. As described above, even when the target vehicle cannot enter the host lane, the vehicle behavior prediction device calculates the amount of protrusion, and thus it is possible to use the amount of protrusion for various controls.

According to the aspect of the present disclosure, it is possible to accurately predict the entry of a target vehicle into the host lane from a road region adjacent to the host lane on which the host vehicle travels.

### BRIEF DESCRIPTION OF THE DRAWINGS

FIG. 1 is a block diagram illustrating an example of a driving support device according to an embodiment.
FIG. 2 is a diagram for explaining a scene in which driving support is performed.
FIG. 3A is a diagram for explaining whether or not a target vehicle enters the host lane.
FIG. 3B is a diagram for explaining whether or not the target vehicle enters the host lane.
FIG. 3C is a diagram for explaining whether or not the target vehicle enters the host lane.
FIG. 4A is a diagram for explaining whether or not the target vehicle enters the host lane.
FIG. 4B is a diagram for explaining whether or not the target vehicle enters the host lane.
FIG. 5 is the first half portion of a flowchart illustrating a flow of a process of driving support for an entry of the target vehicle into the host lane, which is executed by a driving support ECU.
FIG. 6 is the second half portion of a flowchart illustrating the flow of a process of driving support for the entry of the target vehicle into the host lane, which is executed by a driving support ECU.

### DETAILED DESCRIPTION

Hereinafter, an exemplary embodiment will be described with reference to the drawings. In the drawings, the same or corresponding elements are denoted by the same reference signs, and repetitive descriptions will be omitted.

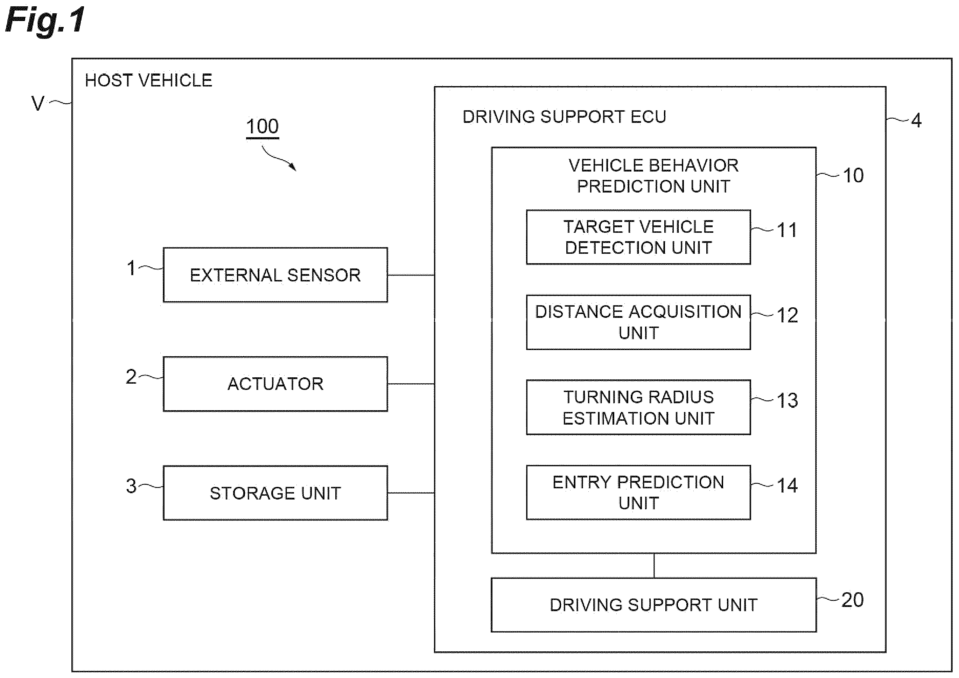

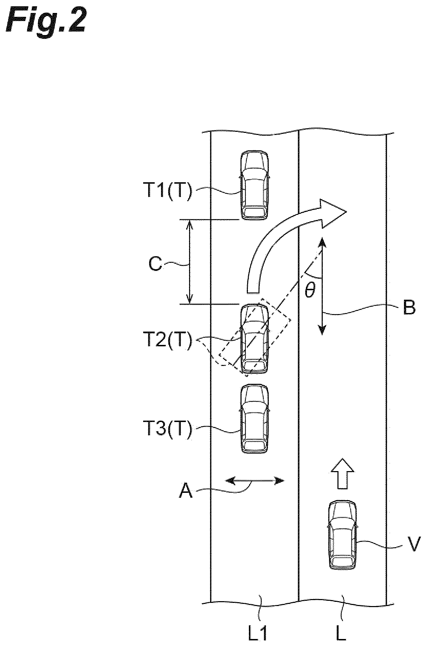

As illustrated in FIG. 1, a driving support device 100 provides driving support for the host vehicle V. As illustrated in FIG. 2, the driving support device 100 in the present embodiment predicts an entry of a target vehicle T into the host lane L from a road region L1 adjacent to the host lane L on which the host vehicle V travels, and performs driving support of the host vehicle V based on a prediction result.

In the example illustrated in FIG. 2, as the target vehicle T, a state in which target vehicles T1 to T3 are lined up on the road region L1 is illustrated. The target vehicle T is a vehicle existing in the road region L1 adjacent to the host lane L on which the host vehicle V travels. The road region L1 may be an adjacent lane adjacent to the host lane L, or may be a space for parking (a space for parallel parking adjacent to a traveling lane).

The target vehicle T may be a vehicle stopped in the road region L1 or may be a vehicle in a queue of congested vehicles traveling on the road region L1. It is assumed that the speed of the host vehicle V is faster than the speed of the target vehicle T.

As illustrated in FIG. 1, the driving support device 100 includes an external sensor 1, an actuator 2, a storage unit 3, and a driving support electronic control unit (ECU) 4.

The external sensor 1 is a detection device that detects the external environment of the host vehicle V. The external sensor 1 includes at least one of a camera and a radar sensor.

The camera is an imaging device that captures an image of the external environment of the host vehicle V. The camera is provided behind the windshield of the host vehicle V and captures images of the front of the vehicle. The camera transmits captured image information regarding the external environment of the host vehicle V to the driving support ECU 4. The camera may be a monocular camera or a stereo camera.

The radar sensor is a detection device that detects an object around the host vehicle V by using radio waves (for example, millimeter waves) or light. The radar sensor includes, for example, a millimeter wave radar or a light detection and ranging (LIDAR). The radar sensor detects an object by transmitting radio waves or light to the vicinity of the host vehicle V, and receiving the radio waves or light reflected by the object. The radar sensor transmits object information regarding the detected object to the driving support ECU 4. The object includes other vehicles, fixed objects such as guardrails and poles installed on roads, signboards, and the like.

The actuator 2 is a device used to control the traveling of the host vehicle V. The actuator 2 includes at least a drive actuator, a brake actuator, and a steering actuator. The drive actuator controls the amount (throttle opening) of air supplied to the engine in response to a control signal from the driving support ECU 4, and controls the driving force of the host vehicle V. When the host vehicle V is a hybrid vehicle, a control signal from the driving support ECU 4 is input to a motor as a power source, and the driving force is controlled, in addition to the amount of air supplied to the engine. When the host vehicle V is an electric vehicle, a control signal from the driving support ECU 4 is input to the motor as the power source, and the driving force is controlled. The motor as the power source in the above cases constitutes the actuator 2.

The brake actuator controls a brake system in response to the control signal from the driving support ECU 4, and controls a braking force applied to the wheels of the host vehicle V. As the brake system, for example, a hydraulic brake system can be used. The steering actuator controls the drive of an assist motor that controls the steering torque in an electric power steering system in response to the control signal from the driving support ECU 4. Thus, the steering actuator controls the steering torque of the host vehicle V.

The storage unit 3 stores turning radius information in which the minimum turning radius is associated with each type of vehicle. The type of vehicle may be a distinction in size, for example, large-sized vehicles, medium-sized vehicles, and small-sized vehicles, and may be a distinction in vehicle form, for example, passenger cars, vans, and trucks. The minimum turning radius is predetermined for each type of vehicle.

The driving support ECU 4 is an electronic control unit that includes a central processing unit (CPU), a read only memory (ROM), a random access memory (RAM), and the like. In the driving support ECU 4, for example, various functions are realized by loading the program stored in the ROM into the RAM and the CPU executing the program loaded in the RAM. The driving support ECU 4 may be constituted by a plurality of electronic units.

The driving support ECU 4 functionally includes a vehicle behavior prediction unit (vehicle behavior prediction device) 10 and a driving support unit 20. The vehicle behavior prediction unit 10 executes a process of predicting the entry of the target vehicle T into the host lane L. The driving support unit 20 executes a driving support process of the host vehicle V based on the prediction result of the vehicle behavior prediction unit 10.

More specifically, the vehicle behavior prediction unit 10 includes a target vehicle detection unit 11, a distance acquisition unit 12, a turning radius estimation unit 13, and an entry prediction unit 14.

The target vehicle detection unit 11 detects a target vehicle T existing in a road region L1. The target vehicle detection unit 11 detects a vehicle existing in the road region L1 as the target vehicle T, by using a well-known technique, for example, based on the detection result of the external sensor 1. The target vehicle detection unit 11 detects the lateral position of the target vehicle T in the road region L1 by using a well-known technique, based on the detection result of the external sensor 1. The lateral position of the target vehicle T in the road region L1 refers to the direction of the target vehicle T in a direction (direction indicated by the arrow A in FIG. 2) perpendicular to a direction along an extension direction of the road region L1.

Further, the target vehicle detection unit 11 detects the inclination of the target vehicle T (direction of the target vehicle T) with respect to the extension direction of the host lane L by using a well-known technique, based on the detection result of the external sensor 1. For example, in the example illustrated in FIG. 2, when a target vehicle T2 is in a state indicated by the solid line, the target vehicle T2 is not inclined with respect to the extension direction of the host lane L. For example, in the example illustrated in FIG. 2, when the target vehicle T2 is in a state indicated by the broken line, the target vehicle T2 is inclined by an angle θ with respect to the extension direction B of the host lane L. In the present embodiment, the target vehicle detection unit 11 detects the lateral position and the inclination of each of target vehicles T1 to T3.

The distance acquisition unit 12 acquires the front distance that is a distance between the target vehicle T and an obstacle existing in front of the target vehicle T. That is, the distance acquisition unit 12 acquires the length of an empty space in front of the target vehicle T. The obstacle here includes other vehicles existing in front of the target vehicle T, fixed objects such as guardrails and poles installed on a road, signboards, and the like. In the present embodiment, the distance acquisition unit 12 acquires the front distance for each of the target vehicles T1 to T3.

In the example illustrated in FIG. 2, for example, an obstacle existing in front of the target vehicle T2 is the target vehicle T1. Therefore, the distance acquisition unit 12 acquires the front distance C between the target vehicle T2 and the target vehicle T1, as the front distance of the target vehicle T2, for example. The front distance can be, for example, set to the length in the direction along the extension direction of the host lane L (road region L1). The distance acquisition unit 12 can acquire the front distance by using a well-known technique, based on the detection result of the external sensor 1.

The turning radius estimation unit 13 estimates the turning radius of the target vehicle T. The turning radius here refers to the radius of a traveling locus for the target vehicle T existing in the road region L1 to enter the host lane L. The turning radius estimation unit 13 can estimate the turning radius of the target vehicle T based on the detection result of the external sensor 1. In the present embodiment, the turning radius estimation unit 13 estimates the turning radius of each of the target vehicles T1 to T3.

Specifically, for example, the turning radius estimation unit 13 detects the steered angle of the tire of the target vehicle T based on the detection result of the external sensor 1. Here, the turning radius estimation unit 13 detects, for example, the steered angle of the front tire, which is the steering wheel. For example, the turning radius estimation unit 13 may detect the steered angle of the tire based on the detection results such as the circular distortion of the tire or the inclination of the wheel surface. In this case, the turning radius estimation unit 13 can detect the steered angle of the tire, for example, based on an image captured by the camera which is the external sensor 1 or the detection result of the radar sensor.

The turning radius estimation unit 13 estimates the turning radius of the target vehicle T based on the detected steered angle of the tire. Here, the larger the steered angle of the tire, the smaller the turning radius.

The turning radius estimation unit 13 can also estimate the turning radius based on the turning radius information stored in the storage unit 3. For example, when the steered angle of the tire of the target vehicle T cannot be detected based on the detection result of the external sensor 1, the turning radius estimation unit 13 can estimate the turning radius by using the turning radius information. Specifically, the turning radius estimation unit 13 recognizes the type of the target vehicle T based on the detection result of the external sensor 1. The turning radius estimation unit 13 extracts the minimum turning radius corresponding to the type of the target vehicle T based on the turning radius information stored in the storage unit 3. The turning radius estimation unit 13 estimates the turning radius of the target vehicle T based on the extracted minimum turning radius. For example, the turning radius estimation unit 13 can recognize the type of the target vehicle T based on pattern matching or the like based on the camera image. For example, the turning radius estimation unit 13 may estimate the extracted minimum turning radius as the turning radius of the target vehicle T.

The entry prediction unit 14 predicts whether or not the target vehicle T is able to enter the host lane L (whether or not there is a possibility of entering) while avoiding an obstacle in front. Here, when the target vehicle T enters toward the host lane L in the current state of the target vehicle T, the entry prediction unit 14 predicts whether or not the target vehicle T is able to enter the host lane L without interfering with the obstacle in front. In the example illustrated in FIG. 2, the obstacle in front, for example, an obstacle in front of the target vehicle T2 is the target vehicle T1 in front of the target vehicle T2. For example, an obstacle in front of the target vehicle T3 is the target vehicle T2 in front of the target vehicle T3. For example, the obstacle in front of the target vehicle T1 may be another vehicle (not illustrated) or a fence, a signboard, a pole, or the like installed in the road region L1, and there may be no obstacle within a predetermined distance in front.

More specifically, the entry prediction unit 14 predicts whether or not the target vehicle T is able to enter the host lane L while avoiding the obstacle in front, based on the front distance acquired by the distance acquisition unit 12 and the turning radius estimated by the turning radius estimation unit 13. Here, the entry prediction unit 14 estimates the traveling locus of the target vehicle T based on the turning radius. The entry prediction unit 14 predicts whether or not the target vehicle T is able to enter the host lane L without interfering with the obstacle when the target vehicle travels on the estimated traveling locus, based on the front distance to the obstacle in front.

When the target vehicle T cannot enter the host lane L while avoiding the obstacle in front, the entry prediction unit 14 predicts the amount of protrusion of the target vehicle T into the host lane L. Here, the entry prediction unit 14 predicts the amount of protrusion of the target vehicle T into the host lane L when the target vehicle T travels to the maximum extent until the target vehicle T interferes with the obstacle in front. The amount of protrusion can be set to the length of the host lane L in a width direction. For example, the target vehicle T cannot avoid the obstacle because the left front end portion of the target vehicle T interferes with the obstacle in front, but the right front end portion of the target vehicle T may protrude into the host lane L. The entry prediction unit 14 predicts, for example, the amount of protrusion of the right front end portion of the target vehicle T into the host lane L.

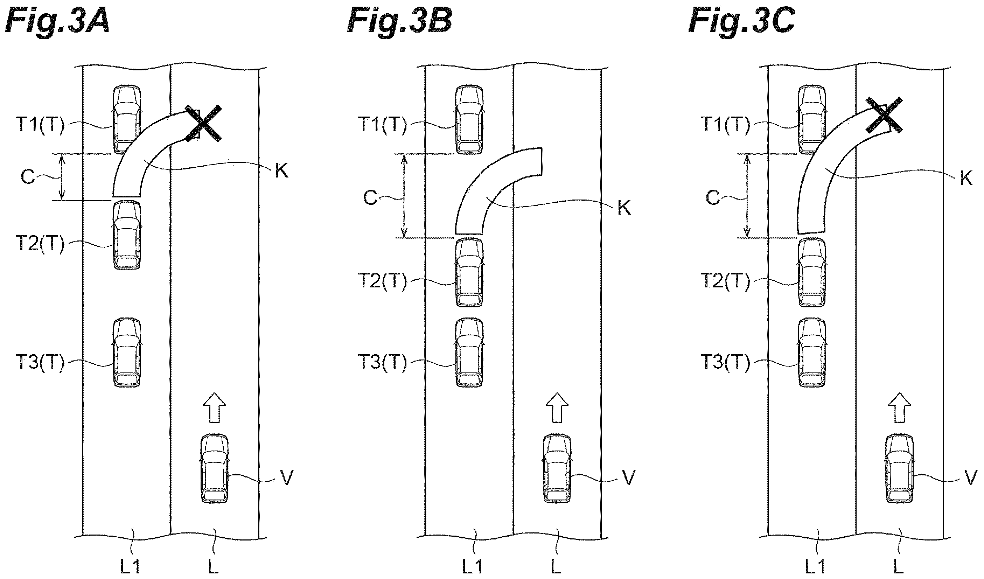

Specifically, for example, as illustrated in FIG. 3A, when the front distance C of the target vehicle T2 is short, that is, when the space between the target vehicle T2 and the target vehicle T1 is narrow, the estimated traveling locus K of the target vehicle T2 interferes with the target vehicle T1. In this case, the entry prediction unit 14 predicts that the target vehicle T2 cannot escape from the queue of vehicles in the road region L1 and the target vehicle T2 cannot enter the host lane L.

For example, as illustrated in FIG. 3B, when the front distance C of the target vehicle T2 is long, that is, when the space between the target vehicle T2 and the target vehicle T1 is wide, the estimated traveling locus K of the target vehicle T2 does not interfere with the target vehicle T1. In this case, the entry prediction unit 14 predicts that the target vehicle T2 can escape from the queue of vehicles in the road region L1 and the target vehicle T2 is able to enter the host lane L.

For example, when the steered angle of the tire of the target vehicle T2 is small, the turning radius of the target vehicle T2, which is estimated based on the steered angle of the tire, is large. Therefore, even when the front distance C is long as illustrated in FIG. 3C, the estimated traveling locus K may interfere with the target vehicle T1. In this case, the entry prediction unit 14 predicts that the target vehicle T2 cannot escape from the queue of vehicles in the road region L1 and it is not possible for the target vehicle T2 to enter the host lane L.

As described above, the entry prediction unit 14 predicts the possibility of entering the host lane L for each of the target vehicles T, by using the front distance and the turning radius.

The entry prediction unit 14 can further predict whether or not the target vehicle T is able to enter the host lane L, based on the lateral position of the target vehicle T in the road region L1. That is, the entry prediction unit 14 predicts whether or not the target vehicle T is able to enter the host lane L, based on the front distance C acquired by the distance acquisition unit 12, the turning radius estimated by the turning radius estimation unit 13, and the lateral position of the target vehicle T in the road region L1, which is detected by the target vehicle detection unit 11.

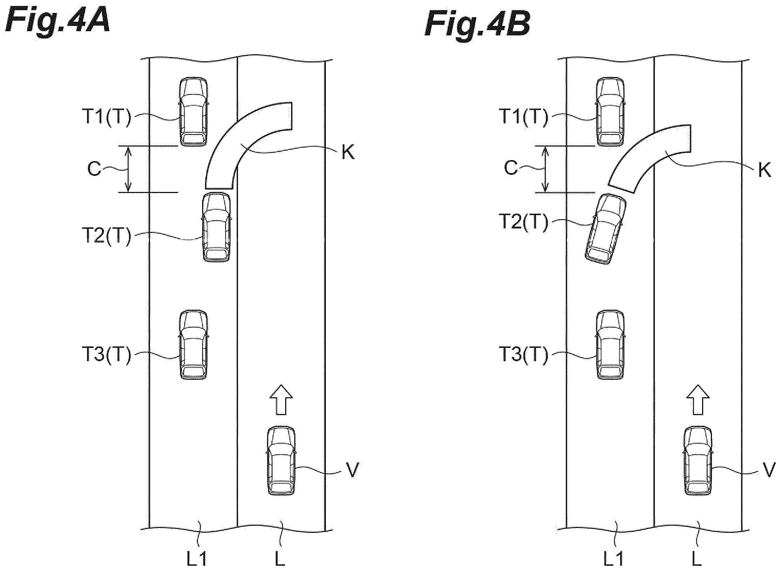

Specifically, for example, as illustrated in FIG. 4A, even when the front distance C of the target vehicle T2 is short, the target vehicle T2 may be able to escape from the queue of vehicles in the road region L1 without the traveling locus K interfering with the target vehicle T1, depending on the lateral position of the target vehicle T2. Therefore, the entry prediction unit 14 predicts whether or not the target vehicle T2 is able to enter the host lane L in consideration of the lateral position of the target vehicle T2 in addition to the front distance C and the turning radius.

The entry prediction unit 14 can further predict whether or not the target vehicle T is able to enter the host lane L, based on the inclination of the target vehicle T with respect to the extension direction of the host lane L. That is, the entry prediction unit 14 predicts whether or not the target vehicle T is able to enter the host lane L, based on the front distance C acquired by the distance acquisition unit 12, the turning radius estimated by the turning radius estimation unit 13, and the inclination of the target vehicle T, which is detected by the target vehicle detection unit 11.

Specifically, for example, as illustrated in FIG. 4B, even when the front distance C of the target vehicle T2 is short, the target vehicle T2 may be able to escape from the queue of vehicles in the road region L1 without the traveling locus K interfering with the target vehicle T1, depending on the inclination of the target vehicle T2. Therefore, the entry prediction unit 14 predicts whether or not the target vehicle T2 is able to enter the host lane L in consideration of the inclination of the target vehicle T2 in addition to the front distance C and the turning radius.

The entry prediction unit 14 can predict whether or not the target vehicle T is able to enter the host lane L, based on the front distance, the turning radius, the lateral position of the target vehicle T, and the inclination of the target vehicle T.

The driving support unit 20 performs driving support of the host vehicle V based on the prediction result of the vehicle behavior prediction unit 10. When it is predicted that the target vehicle T is able to enter the host lane L, the driving support unit 20 can perform various types of driving support. For example, the driving support may be a notification to the driver of the host vehicle V, which is performed through a human machine interface (HMI) or the like, may be a control for decelerating or stopping the host vehicle V by issuing an instruction to the actuator 2, or may be a control of offsetting the lateral position of the traveling of the host vehicle V to a side away from the road region L1 by issuing an instruction to the actuator 2.

Even though it is predicted that the target vehicle T cannot enter the host lane L, the driving support unit 20 may perform the driving support of the host vehicle V based on the amount of protrusion of the target vehicle T into the host lane L. For example, when the amount of protrusion of the target vehicle T is greater than a reference threshold value, the driving support unit 20 performs a notification to the driver described above, the control of decelerating or stopping host vehicle V, and the control of offsetting the lateral position of the host vehicle V.

That is, when it is predicted that the target vehicle T cannot enter the host lane L, the driving support unit 20 does not perform the driving support for the escape of the target vehicle T (enter the host lane L). However, when the amount of protrusion of the target vehicle T is greater than the reference threshold value even though it is predicted that the target vehicle T cannot enter the host lane L, the driving support unit 20 can perform the driving support for the protrusion of the target vehicle T.

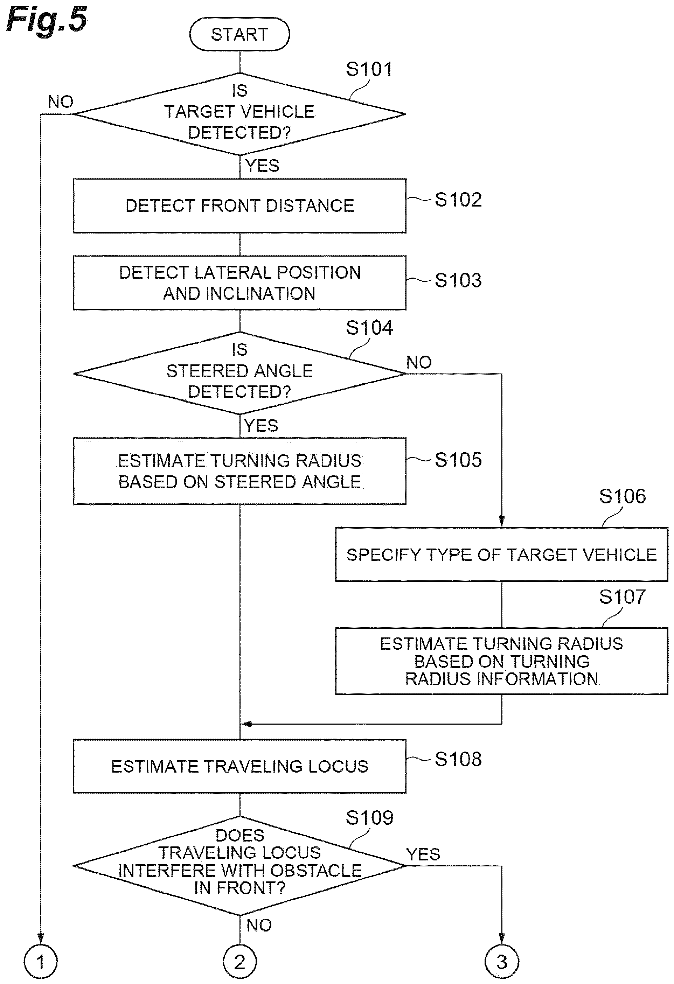

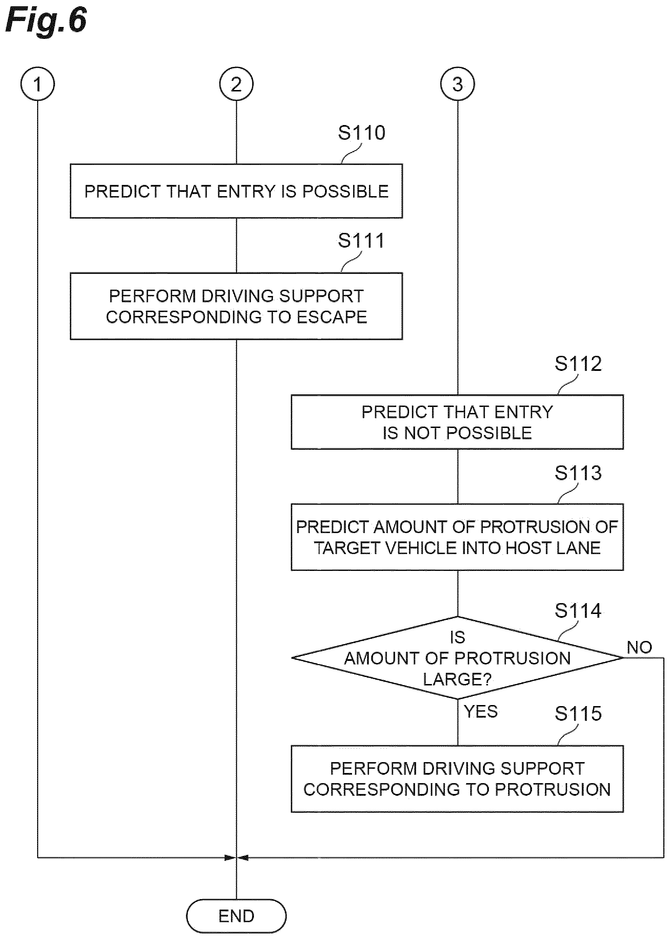

Next, the flow of a process of driving support for the entry of the target vehicle T into the host lane L, which is executed by the driving support ECU 4 will be described with reference to FIGS. 5 and 6. The process illustrated in FIGS. 5 and 6 is started when the host vehicle V is ready to travel. When the process reaches the end, the process is started again from the start after a predetermined time. That is, the driving support ECU 4 repeatedly predicts whether or not the target vehicle T existing in the road region L1 is able to enter the host lane L, at predetermined time intervals.

As illustrated in FIG. 5, the target vehicle detection unit 11 executes a process of detecting the target vehicle T existing in the road region L1 (S101). When the target vehicle T does not exist (S101: NO), the driving support ECU 4 starts the process again from the start after a predetermined time. When the target vehicle T exists (S101: YES), the distance acquisition unit 12 acquires the front distance that is the distance between the target vehicle T and an obstacle existing in front of the target vehicle T (S102). The target vehicle detection unit 11 detects the lateral position of the target vehicle T and the inclination of the target vehicle T (S103).

The turning radius estimation unit 13 performs a process of detecting the steered angle of the tire of the target vehicle T based on the detection result of the external sensor 1 (104). When the steered angle of the tire can be detected (S104: YES), the turning radius estimation unit 13 estimates the turning radius of the target vehicle T based on the steered angle of the tire (S105). When the steered angle of the tire cannot be detected (S104: NO), the turning radius estimation unit 13 specifies the type of the target vehicle T (S106). The turning radius estimation unit 13 estimates the turning radius of the target vehicle T based on the specified type of the target vehicle T and the turning radius information stored in the storage unit 3 (S107).

After the turning radius is estimated in S105 or S107, the entry prediction unit 14 estimates the traveling locus of the target vehicle T based on the turning radius, the lateral position and the inclination of the target vehicle T (S108). The entry prediction unit 14 predicts whether or not the target vehicle interferes with the obstacle when the target vehicle travels on the estimated traveling locus, based on the front distance to the obstacle in front (S109). When the target vehicle does not interfere with the obstacle (S109: NO), the entry prediction unit 14 predicts that the target vehicle T is able to enter the host lane L while avoiding the obstacle in front (S110). Then, the driving support unit 20 performs driving support corresponding to the escape of the target vehicle T into the host lane L (S111).

When the target vehicle interferes with the obstacle (S109: YES), the entry prediction unit 14 predicts that the target vehicle T cannot enter the host lane L while avoiding the obstacle in front (S112). The entry prediction unit 14 predicts the amount of protrusion of the target vehicle T into the host lane L (S113). The driving support unit 20 determines whether or not the predicted amount of protrusion of the target vehicle T is greater than the reference threshold value (S114). When the amount of protrusion is greater than the reference threshold value (S114: YES), the driving support unit 20 performs driving support for the protrusion of the target vehicle T (S115). When the amount of protrusion is equal to or smaller than the reference threshold value (S114: NO), the driving support unit 20 does not perform the driving support. Then, the driving support ECU 4 starts the process again from the start after a predetermined time.

As described above, in the vehicle behavior prediction unit 10 of the driving support device 100, whether or not the target vehicle T is able to enter the host lane L while avoiding an obstacle in front is predicted by using the length of the empty space (front distance) in front of the target vehicle T and the turning radius of the target vehicle T. That is, the vehicle behavior prediction unit 10 can predict whether or not the target vehicle T is able to enter, based on whether or not the target vehicle T is able to physically enter the host lane L by performing steering. Thus, the vehicle behavior prediction unit 10 can accurately predict the entry of the target vehicle T into the host lane L from the road region L1 adjacent to the host lane L on which the host vehicle V travels.

Then, the driving support unit 20 performs driving support of the host vehicle V based on the prediction result of the vehicle behavior prediction unit 10. Thus, it is possible to prevent an occurrence of a situation in which the driving support unit 20 performs driving support for the escape of the target vehicle T into the host lane L even though the target vehicle T cannot enter the host lane L unless the target vehicle turns back. Accordingly, the driving support device 100 can prevent an occurrence of performing unnecessary driving support, and can suppress the driver of the host vehicle V from feeling annoyed.

In the vehicle behavior prediction unit 10, the turning radius estimation unit 13 can estimate the turning radius based on the steered angle of the tire of the target vehicle T. In this case, the entry prediction unit 14 can more accurately predict the entry of the target vehicle T into the host lane L based on the actual steered angle of the tire.

In the vehicle behavior prediction unit 10, the turning radius estimation unit 13 can estimate the turning radius of the target vehicle T from the minimum turning radius corresponding to the type of the target vehicle T, based on the turning radius information stored in the storage unit 3. In this case, the vehicle behavior prediction unit 10 can more accurately predict the entry of the target vehicle T into the host lane L in accordance with the type of the target vehicle T.

For example, the target vehicle T may escape from the queue of vehicles in a parallel parking state where the distance between the front and rear vehicles is short. In such a case, the target vehicle T often retreats as much as possible, performs steering in a stopped state (steering the steering wheel), and attempts to escape from the queue of vehicles with the minimum turning radius. In such a case, it is particularly effective to estimate the turning radius by using the minimum turning radius for each type of the target vehicle T.

In the vehicle behavior prediction unit 10, the entry prediction unit 14 further predicts whether or not the target vehicle T is able to enter the host lane L, based on the lateral position of the target vehicle T in the road region L1. For example, even though the front distance is the same, depending on the lateral position of the target vehicle T, the target vehicle T may be able to enter the host lane L, or the target vehicle T may not be able to enter the host lane L due to the obstacle in front. Therefore, the entry prediction unit 14 can more accurately predict the entry of the target vehicle T into the host lane L by further using the lateral position of the target vehicle T for prediction.

In the vehicle behavior prediction unit 10, the entry prediction unit 14 further predicts whether or not the target vehicle T is able to enter the host lane L based on the inclination of the target vehicle T. For example, even though the front distance is the same, depending on the inclination of the target vehicle T, the target vehicle T may be able to enter the host lane L, or the target vehicle T may not be able to enter the host lane L due to the obstacle in front. Therefore, the entry prediction unit 14 can more accurately predict the entry of the target vehicle T into the host lane L by further using the inclination of the target vehicle T for prediction.

In the vehicle behavior prediction unit 10, the entry prediction unit 14 predicts the amount of protrusion of the target vehicle T into the host lane L when the target vehicle T cannot enter the host lane L while avoiding the obstacle. As described above, even when the target vehicle T cannot enter the host lane L, the vehicle behavior prediction unit 10 calculates the amount of protrusion, and thus it is possible to use the amount of protrusion for various controls. In the present embodiment, the driving support unit 20 performs driving support of the host vehicle V in accordance with the amount of protrusion of the target vehicle T into the host lane L. Thus, even when the target vehicle T cannot enter the host lane L, the driving support device 100 performs driving support for coping with the protrusion when the amount of protrusion into the host lane L is large.

As described above, the driving support device 100 can predict whether or not the target vehicle T is able to enter the host lane L while avoiding the obstacle in front. In addition, when the target vehicle T cannot enter, the driving support device 100 can detect quantitatively the maximum amount of protrusion of the target vehicle T into the host lane L. Thus, the driving support device 100 can suppress performing the driving support of the host vehicle V more than necessary, and can perform the driving support effective for the behavior of the target vehicle T while reducing the annoyance of the driver of the host vehicle V.

In particular, in the parallel parking state where the distance between the front and rear vehicles is short, when the target vehicle T escapes from the queue of vehicles, the vehicle may be turned back a plurality of times. Even in such a situation, the driving support device 100 can accurately predict whether or not the target vehicle T is able to escape from the queue of vehicles, so that it is possible to appropriately perform the driving support of the host vehicle V.

Further, even when the target vehicle T escapes from the queue of congested vehicles, the driving support device 100 can predict the possibility of the target vehicle T entering the host lane L and perform the driving support of the host vehicle V. In this case, the driving support device 100 may predict the possibility of the target vehicle T entering the host lane L in consideration of the vehicle speed of the host vehicle V and/or the vehicle speed of a vehicle in front of the host vehicle V.

Hitherto, the embodiment of the present disclosure has been described above, but the present disclosure is not limited to the above embodiment. For example, the host vehicle V is not limited to being an automobile. For example, the host vehicle V may be a bicycle, a motorcycle, an electric motorcycle, or the like. In this case, the prediction result of the behavior of the target vehicle T by the vehicle behavior prediction unit 10 may be used for a warning system for a bicycle or the like. For example, when a bicycle overtakes a parked vehicle stopped on the shoulder of a road, it is particularly effective to perform a notification of whether or not the parked vehicle is able to escape from a queue of parked vehicles. Further, the prediction result of the behavior of the target vehicle T by the vehicle behavior prediction unit 10 may be applied to a warning system for a pedestrian. In this case, for example, it is possible to predict the behavior of the target vehicle T in the similar manner to the above description by using the information of an external sensor mounted on the glasses or the like worn by the pedestrian.

For example, on a slope, the vehicle may be stopped with the steering wheel steered on the shoulder side of the road. In this case, the driving support device 100 may predict whether or not there is a possibility that the parked vehicle enters the host lane side, only by the angle of the tire without estimating the traveling locus or the like.

For example, the driving support device 100 may be mounted on an autonomous driving vehicle.

## Claims

1. A vehicle behavior prediction device (10) that predicts an entry of a target vehicle into a host lane on which a host vehicle travels, from a road region adjacent to the host lane, the device comprising:
a target vehicle detection unit (11) configured to detect the target vehicle existing in the road region;
a distance acquisition unit (12) configured to acquire a front distance that is a distance between the target vehicle and an obstacle existing in front of the target vehicle;
a turning radius estimation unit (13) configured to estimate a turning radius of the target vehicle; and
an entry prediction unit (14) configured to predict whether or not the target vehicle is able to enter the host lane while avoiding the obstacle, based on the acquired front distance and the estimated turning radius;
wherein the turning radius estimation unit estimates the turning radius based on a steered angle of a tire of the target vehicle.

2. A vehicle behavior prediction device (10) that predicts an entry of a target vehicle into a host lane on which a host vehicle travels, from a road region adjacent to the host lane, the device comprising:
a target vehicle detection unit (11) configured to detect the target vehicle existing in the road region;
a distance acquisition unit (12) configured to acquire a front distance that is a distance between the target vehicle and an obstacle existing in front of the target vehicle;
a turning radius estimation unit (13) configured to estimate a turning radius of the target vehicle;
an entry prediction unit (14) configured to predict whether or not the target vehicle is able to enter the host lane while avoiding the obstacle, based on the acquired front distance and the estimated turning radius; and
a storage unit (3) configured to store turning radius information in which a minimum turning radius is associated with each type of vehicle,
wherein the turning radius estimation unit
extracts the minimum turning radius corresponding to a type of the target vehicle based on the turning radius information stored in the storage unit, and
estimates the turning radius of the target vehicle based on the extracted minimum turning radius.

3. The vehicle behavior prediction device according to claim 1 or 2, wherein
the entry prediction unit (14) further predicts whether or not the target vehicle is able to enter the host lane, based on a lateral position of the target vehicle in the road region.

4. The vehicle behavior prediction device according to any one of claims 1 to 3, wherein
the entry prediction unit (14) further predicts whether or not the target vehicle is able to enter the host lane, based on an inclination of the target vehicle with respect to an extension direction of the host lane.

5. The vehicle behavior prediction device according to any one of claims 1 to 4, wherein
when it is not possible for the target vehicle to enter the host lane while avoiding the obstacle, the entry prediction unit (14) predicts an amount of protrusion of the target vehicle into the host lane.

## Patentansprüche

1. Fahrzeugverhalten-Vorhersagevorrichtung (10), die einen Eintritt eines Zielfahrzeugs in einen Host-Fahrstreifen, auf dem ein Host-Fahrzeug fährt, von einem Straßenbereich benachbart zum Host-Fahrstreifen vorhersagt, wobei die Vorrichtung Folgendes umfasst:
eine Zielfahrzeug-Erfassungsvorrichtung (11), die konfiguriert ist, um das Zielfahrzeug zu erfassen, das im Straßenbereich existiert;
eine Distanzakquisitionseinheit (12), die konfiguriert ist, um eine Frontdistanz zu akquirieren, die eine Distanz zwischen dem Zielfahrzeug und einem Hindernis ist, das vor dem Zielfahrzeug existiert;
eine Wenderadius-Schätzeinheit (13), die konfiguriert ist, um einen Wenderadius des Zielfahrzeugs zu schätzen; und
eine Eintrittsschätzeinheit (14), die konfiguriert ist, um vorherzusagen, ob das Zielfahrzeug in der Lage ist, den Host-Fahrstreifen zu betreten, während das Hindernis vermieden wird, basierend auf der akquirierten Frontdistanz und dem geschätzten Wenderadius;
wobei die Wenderadius-Schätzeinheit den Wenderadius basierend auf einem Lenkwinkel eines Reifens des Zielfahrzeugs schätzt.

2. Fahrzeugverhalten-Vorhersagevorrichtung (10), die einen Eintritt eines Zielfahrzeugs in einen Host-Fahrstreifen, auf dem ein Host-Fahrzeug fährt, von einem Straßenbereich benachbart zum Host-Fahrstreifen vorhersagt, wobei die Vorrichtung Folgendes umfasst:
eine Zielfahrzeug-Erfassungsvorrichtung (11), die konfiguriert ist, um das Zielfahrzeug zu erfassen, das im Straßenbereich existiert;
eine Distanzakquisitionseinheit (12), die konfiguriert ist, um eine Frontdistanz zu akquirieren, die eine Distanz zwischen dem Zielfahrzeug und einem Hindernis ist, das vor dem Zielfahrzeug existiert;
eine Wenderadius-Schätzeinheit (13), die konfiguriert ist, um einen Wenderadius des Zielfahrzeugs zu schätzen;
eine Eintrittsschätzeinheit (14), die konfiguriert ist, um vorherzusagen, ob das Zielfahrzeug in der Lage ist, den Host-Fahrstreifen zu betreten, während das Hindernis vermieden wird, basierend auf der akquirierten Frontdistanz und dem geschätzten Wenderadius; und
eine Speichereinheit (3), die konfiguriert ist, um Wenderadiusinformationen zu speichern, in denen ein minimaler Wenderadius jeder Art von Fahrzeug zugewiesen wird,
wobei die Wenderadius-Schätzeinheit
den minimalen Wenderadius entsprechend einer Art des Zielfahrzeugs basierend auf den Wenderadiusinformationen extrahiert, die in der Speichereinheit gespeichert sind, und
den Wenderadius des Zielfahrzeugs basierend auf dem extrahierten minimalen Wenderadius schätzt.

3. Fahrzeugverhalten-Vorhersagevorrichtung nach Anspruch 1 oder 2, wobei
die Eintrittsschätzeinheit (14) ferner vorhersagt, ob das Zielfahrzeug in der Lage ist, den Host-Fahrstreifen zu betreten, basierend auf einer lateralen Position des Zielfahrzeugs im Straßenbereich.

4. Fahrzeugverhalten-Vorhersagevorrichtung nach einem der Ansprüche 1 bis 3, wobei
die Eintrittsschätzeinheit (14) ferner vorhersagt, ob das Zielfahrzeug in der Lage ist, den Host-Fahrstreifen zu betreten, basierend auf einer Ausrichtung des Zielfahrzeugs in Bezug auf eine Verlaufsrichtung des Host-Fahrstreifens.

5. Fahrzeugverhalten-Vorhersagevorrichtung nach einem der Ansprüche 1 bis 4, wobei,
wenn es für das Zielfahrzeug nicht möglich ist, den Host-Fahrstreifen zu betreten, während das Hindernis vermieden wird, die Eintrittsschätzeinheit (14) ein Ausmaß des Vorstehens des Zielfahrzeugs in den Host-Fahrstreifen vorhersagt.

## Revendications

1. Dispositif de prédiction de comportement de véhicule (10) qui prédit une entrée d'un véhicule cible dans une voie hôte sur laquelle se déplace un véhicule hôte, à partir d'une région routière adjacente à la voie hôte, le dispositif comprenant :
une unité de détection de véhicule cible (11) configurée pour détecter le véhicule cible existant dans la région routière ;
une unité d'acquisition de distance (12) configurée pour acquérir une distance avant qui est une distance entre le véhicule cible et un obstacle existant devant le véhicule cible ;
une unité d'estimation du rayon de braquage (13) configurée pour estimer un rayon de braquage du véhicule cible ; et
une unité de prédiction d'entrée (14) configurée pour prédire si le véhicule cible est capable ou non d'entrer dans la voie hôte tout en évitant l'obstacle, sur la base de la distance avant acquise et du rayon de braquage estimé ;
dans lequel l'unité d'estimation de rayon de braquage estime le rayon de braquage sur la base d'un angle de braquage d'un pneu du véhicule cible.

2. Dispositif de prédiction de comportement de véhicule (10) qui prédit une entrée d'un véhicule cible dans une voie hôte sur laquelle se déplace un véhicule hôte, à partir d'une région routière adjacente à la voie hôte, le dispositif comprenant :
une unité de détection de véhicule cible (11) configurée pour détecter le véhicule cible existant dans la région routière ;
une unité d'acquisition de distance (12) configurée pour acquérir une distance avant qui est une distance entre le véhicule cible et un obstacle existant devant le véhicule cible ;
une unité d'estimation du rayon de braquage (13) configurée pour estimer un rayon de braquage du véhicule cible ;
une unité de prédiction d'entrée (14) configurée pour prédire si le véhicule cible est capable ou non d'entrer dans la voie hôte tout en évitant l'obstacle, sur la base de la distance avant acquise et du rayon de braquage estimé ; et
une unité de stockage (3) configurée pour stocker des informations de rayon de braquage dans lesquelles un rayon de braquage minimal est associé à chaque type de véhicule,
dans lequel l'unité d'estimation de rayon de braquage
extrait le rayon de braquage minimal correspondant à un type du véhicule cible sur la base des informations de rayon de braquage stockées dans l'unité de stockage, et
estime le rayon de braquage du véhicule cible sur la base du rayon de braquage minimal extrait.

3. Dispositif de prédiction de comportement de véhicule selon la revendication 1 ou 2, dans lequel
l'unité de prédiction d'entrée (14) prédit en outre si le véhicule cible est capable ou non d'entrer dans la voie hôte, sur la base d'une position latérale du véhicule cible dans la région routière.

4. Dispositif de prédiction de comportement de véhicule selon l'une quelconque des revendications 1 à 3, dans lequel
l'unité de prédiction d'entrée (14) prédit en outre si le véhicule cible est capable ou non d'entrer dans la voie hôte, sur la base d'une inclinaison du véhicule cible par rapport à une direction d'extension de la voie hôte.

5. Dispositif de prédiction de comportement de véhicule selon l'une quelconque des revendications 1 à 4, dans lequel
lorsqu'il n'est pas possible pour le véhicule cible d'entrer dans la voie hôte tout en évitant l'obstacle, l'unité de prédiction d'entrée (14) prédit une quantité de saillie du véhicule cible dans la voie hôte.
